# EUROPÄISCHE PATENTANMELDUNG

(11) **EP 4 148 005 A1**
(43) Veröffentlichungstag der Anmeldung: **15.03.2023**
(21) Anmeldenummer: 21196498.6
(22) Anmeldetag: 14.09.2021
(51) Int. Cl.: B65G 13/02, B65G 65/00, B65G 13/071

(54) **FÖRDEREINHEIT, FÖRDERSYSTEM UND VERFAHREN ZUM TRANSPORTIEREN, SPEICHERN UND SORTIEREN VON LADEEINHEITEN AUF FÖRDEREINHEITEN**

(71) Anmelder: Siemens Aktiengesellschaft, 80333 München (DE)
(72) Erfinder: KLEIN, Matthias, 63456 Hanau (DE)
(74) Vertreter: Siemens Patent Attorneys

(57) **Zusammenfassung**

ULD-Transport zwischen Airside und Landside erfolgt noch häufig durch komplett manuelles Verschieben der ULDs (4) auf manuellen Fördereinheiten (2) (Slave-Paletten). Das Erfordernis einer großen Ausfallsicherheit, Anschaffungs- und Wartungskosten sowie hohe Flexibilitätsanforderungen verhindern vollautomatische Lösungen. Die Erfindung betrifft eine Fördereinheit (2), ein Fördersystem und Verfahren zum Transportieren, Speichern und Sortieren von Ladeeinheiten (4) auf Fördereinheiten (4). Die Fördereinheit (4) ist von einem fahrerlosen Transportfahrzeug (16) unterfahrbar und umfasst unterschiedliche Transportrichtungen (24) bestimmende Übertriebsmittel (8), welches von unten in Wirkkontakt mit dem Antriebsmittel (22) des Transportfahrzeugs (16) angetrieben wird, so dass ein auf dem Übertriebsmittel (8) aufliegendes ULD (4) bewegt wird. Die Fördereinheit (2) umfasst auch Stützrollen (10), auf denen ein ULD (4) mit geringen Reibungsverlusten bewegt werden kann. Mit nur einem Transportfahrzeug und mehreren kostengünstigen Fördereinheitenkann eine große und flexible Transportebene bereitgestellt werden. Bei einem Transportfahrzeugausfall oder bei Kapazitätsspitzen wird auf ein weiteres Transportfahrzeug oder auf manuelles Verschieben zurückgegriffen. Dies führt zu einer nahezu 100%ige Ausfallsicherheit.

## Beschreibung

Die vorliegende Erfindung betrifft eine Fördereinheit, ein Fördersystem und ein Verfahren zum Transportieren von Ladeeinheiten.

Manuelle Förderelemente wie Castorflächen, Kugelrollenflächen, Slave-Paletten werden zum Be- und Entladen sowie zum innerbetrieblichen Transport und zur Speicherung und Sortierung von Ladeeinheiten, insbesondere Luftfracht-Ladungseinheiten (ULDs), oder größeren Transportgütern benutzt. Slave-Paletten als manuelle Förderelemente zeichnen sich aus durch eine begehbare Plattform mit nicht angetriebenen Transportrollen auf denen die ULDs manuell verschoben werden, beispielsweise von dem Ende einer Endstelle hin zu einem einen Dolly.

Manuelle Förderelemente bieten den Vorteil einer nahezu vollständigen Ausfallsicherheit, aber das Verschieben der ULDs ist anstrengend, arbeitsintensiv und gefährlich. Daher existieren Slave-Paletten nachempfundene, manuell betreibbare Fördereinheiten mit antreibbaren Transportrollen. Das Ausrüsten mit antreibbaren Transportrollen ist teuer und die Transportrollen können ausfallen. Es ist auch möglich, die Übertriebsrollen einer Slave-Palette von unten mit einem an die Dimensionen der Slave angepassten, variabel positionierbaren fahrerlosen autonomen Transportfahrzeug (bekannt als FTF, AGV oder als Mobile Robots) anzutreiben. Somit können mehrere Slave-Paletten von einem AGV angetrieben werden. Die existierenden, von einem fahrerlosen Transportfahrzeug (AGV) antreibbaren Slave-Paletten fördern nur linear und sind rechteckig, da sie an ULD-Maße angepasst dimensioniert sind.

Im Luftfrachtbereich kommt es häufig zu Auftragsspitzen, die an unterschiedlichen Orten rasch und flexibel bearbeitet werden müssen. AGVs kommen dabei noch sehr selten zum Einsatz, obwohl sie die effizienteste Möglichkeit für den Transport von Airside nach Landside und umgekehrt darstellen. Auch die Ausstattung manueller Förderelemente mit antreibbaren Transportrolle wird nur selten herangezogen, da diese lange Zeit brach liegen und sie teuer in der Anschaffung und zudem wartungsintensiv sind. Bei einem Ausfall des Antriebs einer Transportrolle fällt die gesamte Anlage aus. Daher wird aus Kostengründen und aus Gründen der Ausfallsicherheit weiterhin häufig auf eine manuelle Verschiebung von ULDs auf von Slave-Paletten o.ä. manuellen Fördereinheiten gebildete Transportebenen zurückgegriffen. Die existierende Lösung mit von AGV angetriebenen Slave-Paletten erfordert weiterhin Komponenten wie Eckumsetzer.

Förderanlagen-Layouts werden für die erwarteten Durchsätze geplant und entsprechend wird eine Förderanlage genau für den zu erwartenden Anwendungsfall dimensioniert. Da sich mit der Zeit die Anforderungen an eine Förderanlage ändern, muss sie später mit hohem Kostenaufwand entsprechend angepasst werden.

Zudem müssen alle Anlagenteile für ihre maximale Auslastung ausgelegt werden. Das heißt, dass bestimmte Bereiche der Anlage nur für wenige Stunden am Tag tatsächlich genutzt werden. Ziel sollte aber sein, jede Komponente der Anlage möglichst stark auszunutzen.

Typische Lager sind so aufgebaut, dass sie einen fest installierten, landseitigen und einen airseitigen Speicherbereich besitzen. Diese beiden Bereiche sind durch Fördertechnik verbunden, die ebenfalls zur Sortierung und Speicherung genutzt werden kann. Bisher versucht man anhand der Durchsatzinformationen diese beiden Lagerbereiche optimal auszulegen. Ändern sich die Rahmenparameter, hat man auch hier entweder zu viel oder zu wenig Speicherkapazität.

Der vorliegenden Erfindung liegt daher die Aufgabe zugrunde, eine flexible, ausfallsichere und verbesserte Lösung bereitzustellen. Diese Aufgabe wird durch die in den unabhängigen Ansprüchen beschriebenen Lösungen gelöst.

Die erfindungsgemäße Vorrichtung betrifft eine Fördereinheit zum Transportieren einer Ladeeinheit, insbesondere einer ULD, umfassend eine Plattform, Übertriebsmittel, Stützrollen und Stützelemente. Die Stützelemente stützen die Plattform derart angeordnet ab, insbesondere indem die Stützelemente an den Ecken der Plattform angeordnet sind, dass die Fördereinheit von einem fahrerlosen Transportfahrzeug (AGV) unterfahrbar ist. Die Plattform weist Öffnungen auf, aus welchen die Stützrollen jeweils herausragen, wobei die Stützrollen mit ihren obersten Punkten eine Transportebene definieren, auf der die Ladeeinheit mit geringen Reibungsverlusten bewegbar ist. Jeweils einige oder alle der Übertriebsmittel sind mit einem Antriebsmittel des die Fördereinheit unterfahrenden Transportfahrzeugs in Wirkkontakt bringbar und von diesem Antriebsmittel antreibbar, so dass die Übertriebsmittel eine auf ihnen aufliegende Ladeeinheit bewegen. Die Fördereinheit weist mindestens zwei, insbesondere vier, durch Ausrichtung und Rollrichtung der jeweils angetriebenen Übertriebsmittel bestimmte Transportrichtungen auf, wobei zwei der Transportrichtungen insbesondere schräg, noch insbesonderer quer und entlang den Seiten der Fördereinheit, zueinander sind.

Hinsichtlich eines Verfahrens wird die vorstehend genannte Aufgabe gelöst durch ein Verfahren zum Transportieren, Speichern und Sortieren von Ladeeinheiten auf erfindungsgemäßen Fördereinheitenunter Heranziehen von einem fahrerlosen Transportfahrzeug. Das Transportfahrzeug umfasst ein Antriebsmittel, welches ausgestaltet ist, in Wirkkontakt mit jeweils einigen oder allen Übertriebsmitteln gebracht zu werden und sie anzutreiben. Das Transportfahrzeug und die Fördereinheit sind derart aneinander angepasst dimensioniert und ausgestaltet, dass das Transportfahrzug die Fördereinheit unterfahren und sich unter der Fördereinheit drehen kann, ohne währenddessen in Wirkkontakt zu sein und ohne die Fördereinheit mitzubewegen. Die Fördereinheitensind hinter- und/oder nebeneinander anordenbar, so dass sie Förderstrecken und/oder Transportflächen für die Ladeeinheiten ausbilden. Bei ordnungsgemäß funktionierendem und zur Verfügung stehendem Transportfahrzeug werden die Verfahrensschritte durchgeführt:
a) Das Transportfahrzeug unterfährt eine ausgewählte Fördereinheit.
b) Zum Bewegen einiger oder aller Übertriebsmittel dieser Fördereinheit wird das Antriebsmittel des Transportfahrzeugs in Wirkkontakt mit diesen Übertriebsmitteln gebracht und diese werden von dem Antriebsmittel angetrieben, so dass eine auf diesen Übertriebsmitteln aufliegende Ladeeinheit bewegt wird.
c) Lösen des Wirkkontakts.
d) Repositionieren des Transportfahrzeugs durch Unterfahren einer anderen Fördereinheiten oder durch Drehen des Transportfahrzeugs unter derselben Fördereinheit.

Die erfindungsgemäße Lösung betrifft zudem ein Fördersystem umfassend mindestens eine erfindungsgemäße Fördereinheit und mindestens ein fahrerloses Transportfahrzeug. Das Fördersystem umfasst Mittel zur Durchführung des erfindungsgemäßen Verfahrens.

So können sich die folgenden Vorteile zusätzlich ergeben:

Die erfindungsgemäße Lösung zeichnet sich aus durch einen automatischen Transport, Bereitstellung und Sortierung der Ladeeinheiten. Ein manuelles Verschieben der Ladeeinheiten ist nicht mehr erforderlich, so dass weniger Mitarbeiter benötigt werden und laufende Kosten reduziert werden. Die erfindungsgemäße Lösung ist zudem ausfallsicher und kann flexibel eingesetzt werden, da bei nicht funktionierenden und/oder nicht in ausreichender Anzahl zur Verfügung stehenden Transportfahrzeugen auf ein manuelles Verschieben zurückgegriffen werden kann. Da die Fördereinheiten ebenso wie typische Slave-Paletten keine eigenen Antriebe aufweisen und zudem sehr robust sind, ist nur zu Beginn mit einem einmalig erhöhtem Kostenaufwand für die Anschaffung zu rechnen. Da die Fördereinheitenvariabel anordenbar sind, ist die Lösung hoch modular und der Aufbau des Fördersystems somit äußerst unkompliziert und flexibel. Das Drehen des Transportfahrzeugs unter einer Fördereinheit stellt einen Eckumsetzer bereit.

Vorteilhafte Ausgestaltungen der Erfindung ergeben sich aus den Unteransprüchen. Auf diese Ausgestaltungsformen, die jeweils für sich vorteilhaft und, sofern nicht anders ausgeführt, beliebig miteinander kombinierbar sind, und die mit ihnen verbundenen Vorteile wird im Folgenden eingegangen.

Das Verfahren weist, soweit übertragbar, die gleichen Vorteile auf, welche bezüglich der vorgestellten Vorrichtungen aufgeführt sind. Insbesondere sind die Merkmale der Unteransprüche jeweils einzeln und in beliebiger geeigneter Kombination mit dem erfindungsgemäßen Verfahren, der erfindungsgemäßen Fördereinheit und dem erfindungsgemäßen Fördersystem kombinierbar. So sind Verfahrensmerkmale auch als Eigenschaft der entsprechenden Vorrichtungseinheit gegenständlich formuliert zu sehen und umgekehrt.

Es ist vorteilhaft, die Höhe der Fördereinheit auf die Höhe des Sortierziels, im Air-Cargo Bereich kann dies ein Dolly sein, anzupassen. So kann eine Ladeeinheit ohne weitere Mittel direkt auf das Sortierziel verschoben werden.

Unterfahren bedeutet, dass das Transportfahrzeug unter eine Fördereinheit fährt, ohne sie dabei zu bewegen. Die Stützrollen können z.B. Kugelrollen oder Castorrollen sein und dienen der Abstützung der Ladeeinheit, um die Reibungsverluste beim Bewegen zu minimieren. Hierbei kann das Transportfahrzeug gänzlich unter nur einer Fördereinheit positioniert sein, oder aber zugleich unter zwei Fördereinheiten positioniert sein. Wenn das Antriebsmittel des Transportfahrzeugs anschließend mit den Übertriebsmitteln in Wirkkontakt gebracht wird mit dem Ziel die Übertriebsmittel anzutreiben, entsteht also ein Wirkkontakt mit den Übertriebsmitteln von nur einer oder von beiden Fördereinheiten.

Um die Übertriebsmittel auf besonders einfache Weise anzutreiben, können die Übertriebsmittel Übertriebsrollen oder Übertriebsbänder und der Wirkkontakt zwischen Übertriebsmittel und Antriebsmittel ein Reibkontakt sein. Der Wirkkontakt kann hergestellt bzw. gelöst werden, wenn das Transportfahrzeug unter der Fördereinheit positioniert ist durch Anheben bzw. Absenken des Antriebsmittels. Hierzu umfasst das Transportfahrzeug eine Hubvorrichtung. Das Antriebsmittel wird gemäß einer Ausführungsform so lange nach oben bewegt bis der Wirkkontakt hergestellt ist. Das von unten an das Übertriebsmittel gepresste Antriebsmittel wird dann angetrieben und bewegt so die Übertriebsmittel, wodurch wiederum die Ladeeinheit bewegt wird.

Aus Sicherheitsgründen, insbesondere bei manuellem Betrieb oder für Wartung, können die Übertriebsmittel arretierbar und/oder unterhalb der Transportebene absenkbar sein. Dies kann einfach realisiert werden, indem die Übertriebsmittel flexibel gelagert sind und nur im Wirkkontakt mit dem Antriebsmittel, also durch Anheben des Antriebsmittels, auf Höhe der Transportebene angehoben wird. Wenn der Wirkkontakt gelöst wird, wird gleichzeitig das Übertriebsmittel wieder abgesenkt. Die Arretierung fixiert das Übertriebsmittel und kann realisiert werden, indem die nicht von dem Antriebsmittel angehobenen Übertriebsmittel auf einem Querträger ganz oder punktuell abgesetzt werden. Dieser kann eine Sperre (Ritzel, Splint, o.ä.) aufweisen oder allein durch Haftung die Fixierung des Übertriebsmittels erzielen. Das Anheben bzw. Absenken und/oder Lösen bzw. Arretieren der Übertriebsmittel, wenn der Wirkkontakt zwischen Antriebsmittel und Übertriebsmittel hergestellt bzw. gelöst wird kann der Fachmann auf einfache Weise ohne erfinderisches Zutun realisieren.

Um die Ladeeinheiten gegen Herabfallen abzusichern, können die Fördereinheitenentlang den Transportrichtungen, am Rand der Fördereinheit angeordnete, insbesondere oberhalb der Transportebene anhebbare und absenkbare Führungselemente, insbesondere Führungsschienen, beispielsweise als Schwertstopps ausgestaltet, umfassen, wobei die Führungselemente insbesondere von dem Transportfahrzeug anhebbar sein können. Auf besonders einfach Weise können die Führungselemente zugleich mit dem Anheben des Antriebsmittel beim Herstellen des Wirkkontakts zwischen Antriebsmittel und Übertriebsmitteln von derselben Hubvorrichtung hochgehoben werden.

Gemäß einer Anordnung kann die Anordnung der Stützelemente dem Transportfahrzeug erlauben, die Fördereinheit entlang allen Transportrichtungen von allen Seiten (der Fördereinheit) her, d.h. unter der Seitenkante durch, zu unterfahren und sich unter der Fördereinheit zu drehen, insbesondere ohne dass Übertriebsmittel und Antriebsmittel währenddessen in Wirkkontakt sind. So kann das Transportfahrzeug die kürzest möglichen Wege zurücklegen.

Gemäß einer Ausführungsform können die Stützrollen als Übertriebsmittel agieren, die Übertriebsrollen sind zugleich Stützrollen. Realisierbar ist dies beispielsweise indem als Antriebsmittel ein umlaufendes Förderband herangezogen wird, welches dann von unten an die Stütz- bzw. Übertriebsrollen gepresst wird und diese über Rollreibung antreibt. Um auch bei einem Ausfall des Transportfahrzeugs auch ein manuelles Verschieben der Ladeeinheiten zu erlauben sollte eine allfällig vorhandene Arretierung der Übertriebsmittel auch ohne Transportfahrzeug einstellbar sein.

Gemäß einer Ausführungsform kann das Transportfahrzeug eine umzuplatzierende Fördereinheit unterfahren. Anschließend kann erfolgen Anheben, Verfahren und Absetzen dieser Fördereinheit an anderer Position durch das Transportfahrzeug. So können Förderstrecken und Förderebene rasch neu aufgebaut und abgebaut werden und es kann rasch und flexibel ohne weitere Mittel am Ort des Bedarfs ein Fördersystem aufgebaut werden.

Gemäß einer Ausführungsform kann erfolgen eine erneute Durchführung des Verfahrens ab Verfahrensschritt b) nach dem Repositionieren des Transportfahrzeugs und/oder eine koordinierte Durchführung der Verfahrensschritte mit einem weiteren fahrerlosen Transportfahrzeug. Hierzu umfasst das Fördersystem zwei oder mehr der Transportfahrzeuge und eine Steuereinheit zum koordinierten Ansteuern dieser Transportfahrzeuge.

Gemäß einer Ausführungsform kann ein Transportfahrzeug eine Ladeeinheit direkt aufnehmen und sie an eine der Fördereinheiten oder eine andere Auflagefläche übergeben. Das Transportfahrzeug ist ausgestaltet, eine Ladeeinheit aufzunehmen und an eine der Fördereinheiten und/oder eine andere Auflagefläche zu übergeben. So können spezielle Übergabegeräte redundant werden. Das Transportfahrzeug kann ausgestaltet sein, mit einer aufliegenden Ladeeinheit verfahren zu werden.

Um das Fördersystem, die Fördereinheit und das Verfahren nahezu komplett ausfallsicher zu machen und/oder um bei nicht ausreichender Anzahl zur Verfügung stehender Transportfahrzeuge Kapazitätsspitzen ohne zusätzliche Materialinvestitionen abzufedern, kann ein manuelles Verschieben einer auf den Stützrollen einer oder mehrerer Fördereinheitenaufliegenden Ladeeinheit erfolgen, wenn das Transportfahrzeug nicht zur Verfügung steht und/oder nicht ordnungsgemäß funktioniert.

Ausführungsformen der Erfindung werden nachfolgend anhand der Figuren beispielsweise näher erläutert. Dabei zeigen:
- Figuren 1+3: erfindungsgemäße Slave-Paletten;
- Figuren 2a+2b: Übertriebsmittel und Antriebsmittel mit (Figur 2a) und ohne (Figur 2b) Wirkkontakt;
- Figur 4: ein sich unter einer Slave-Palette drehendes Transportfahrzeug;
- Figur 5: das Unterfahren einer Slave-Palette von allen Seiten; und
- Figur 6: Aufsicht auf eine aus Slave-Paletten ausgebildete Förderebene;
- Figuren 7a-7c, 8a-8b, 9a-9b: im Querschnitt das Verschieben einer Ladeeinheit mit einem Transportfahrzeug;
- Figur 10: ein typisches ULD-Fördersystem eines Flughafens;
- Figuren 11a-1sc: erfindungsgemässe, flexible Fördersys-teme.

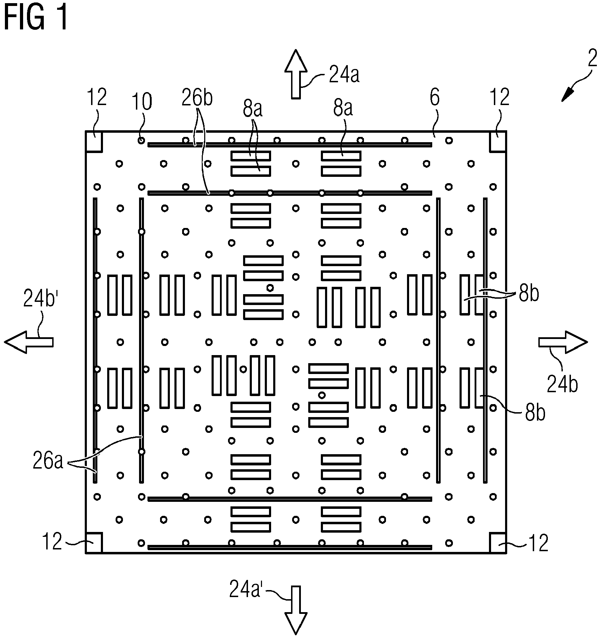

Figur 1 zeigt eine 4-Wege-Slave-Palette 2 als Ausführungsform einer Fördereinheit 2. Die Slave-Palette 2 umfasst eine Plattform 6 mit Öffnungen für Stützrollen 10, typischerweise als Kugelrollen, Castorrollen oder Schwenkrollen ausgestaltet, und als Übertriebsrollen 8a, 8b ausgestattet Übertriebsmittel 8. Die Stützrollen 10 schauen aus Öffnungen der Plattform und erlauben in der Art eines Kugelrollen- oder Castorrollentisches einen Transport in alle Richtungen. Die Stützrollen 10 bilden hierbei eine Transportebene 20 aus zur Auflage von Ladeeinheiten 4 wie ULDs 4. Breite und Länge der Slave-Palette 2 ist abhängig vom Typ der Ladeeinheit 4. Die Füße 12 auf denen die Plattform 6 aufliegt, sind weit außen in den Ecken der Plattform 6 angeordnet, damit die Slave-Palette 2 von einem fahrerlosen Transportfahrzeug von allen Seiten unterfahren werden kann. Der Freiraum unter der 4-Wege-Slave-Palette 2 muss groß genug sein damit dass AGV 16 die Plattform 6 der Slave-Palette 2 unterfahren kann ohne dass während der Bewegung die Übertriebsmittel 8 und die Antriebsmittel 22 in Wirkkontakt sind oder die Slave-Palette 2 mitbewegt wird. Ohne AGV 16 können Ladeeinheiten 4 manuell wie auf einer typischen Fördertechnik, so wie z.B. bei typischen Slave-Paletten 2, verschoben werden. Wenn die Übertriebsrollen 8a, 8b unter der Transportebene 20 abgesenkt sind, ist ein Verschieben auf den durch die Stützrollen 10 aufgespannten Transportebene 20 in jeder Richtung möglich - die möglichen Transportrichtungen 24 sind dann nicht vorbelegt und nur durch allfällige Führungselemente 26 beschränkt. Gemäß einer hier nicht gezeigten Ausführungsform sind die Übertriebsmittel 8 derart gelagert, dass ihre Ausrichtung flexibel angepasst werden kann.

Die Slave-Paletten 2 können hinter- und nebeneinander angeordnet werden und so flexibel Förderstrecken und Transportflächen für die Ladeeinheiten 4 ausbilden.

Es ist gemäß einer Ausführungsform auch möglich, dass die Stützrollen 10 Übertriebsrollen 8 sind und von diesen angetrieben werden. In dem Fall werden die Stützrollen 10 angetrieben. Um die Fördereinheit 2 als Slave-Palette 2 ohne AGV 16 zu verwenden, soll kein Absenken der Stütz- bzw. Übertriebsrollen 8 erfolgen.

Die Übertriebsrollen 8a, 8b, deren Transportrichtungen 24a, 24b jeweils durch die Seite der Slave-Palette 2 bestimmt sind, werden von unten mit einem Antriebsmittel 22 in Wirckontakt gebracht und von diesem angetrieben.

Damit ein Antriebsmittel 22 für mehrere Slave-Paletten 2 herangezogen werden kann, wird dieses auf einem fahrerlosen Transportfahrzeug 16 montiert und unter eine ausgewählte Slave-Palette 2 gefahren. Die Rollrichtung und welche der Übertriebsrollen 8a oder 8b angetrieben wird, bestimmt die Transportrichtung 24a, 24a', 24b, 24b'. Die Übertriebsrollen 8a, 8b übertragen das Antriebsmoment des Antriebsmittels 22 auf eine auf den Übertriebsrollen 8a, 8b und auf den Stützrollen 10 aufliegende Ladeeinheit 4.

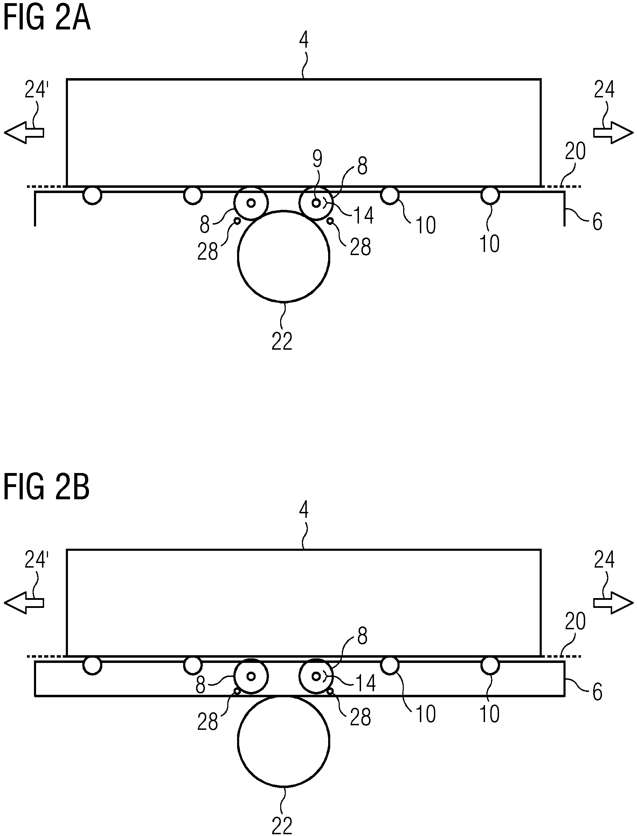

Zunächst fährt das Transportfahrzeug 16 unter die Slave-Palette 2 ohne dass das Antriebsmittel 22 die Übertriebsrollen 8 berührt (kein Wirkkontakt, Figur 2b). Die Wellen 9 der Übertriebsrollen 8 sind flexibel gelagert und liegen in Ruheposition (Figur 2b) auf einer Fixiervorrichtung 28 auf. Die Fixiervorrichtung 28 verhindert eine Bewegung der Übertriebsrolle 8. Dies kann beispielsweise erreicht werden durch eine starke Haftung zwischen Fixiervorrichtung 28 und

Übertriebsrolle 8 (die Fixiervorrichtung 28 kann als einfache Querstange ausgestaltet sein), oder aber durch eine zusätzliche mechanische Sperre (beispielsweise Ritzel mit Splint, eine Seite der Übertriebsrolle 8 arretiert beim Absenken). Auch durch eine Fixierung der Welle 9 in der Ruheposition, beispielsweise indem die Unterseite der Lagerung keine Rotation der Antriebsrolle 22 zulässt,

Anschließend wird das als Antriebsrolle 22 ausgestaltete Antriebsmittel 22 von unten gegen die Übertriebsrollen 8 gepresst, hebt diese an bis die Oberseite der Übertriebsrollen 8 auf Höhe der Transportebene 20 ist - Übertriebsrollen 8 und Antriebsrollen 22 sind im Eingriff (Figur 2a). Eine Antriebsrolle 22 wird hier gegen zwei Übertriebsrollen 8 gepresst und treibt beide zugleich an. Der Wirkkontakt mit den Übertriebsrollen 8 wird also hergestellt durch Anheben der Antriebsrollen 22 so lange bis die Antriebsrollen 22 in Reibkontakt mit den Übertriebsrollen sind.

Beim Anheben des Antriebsmittels 12 werden von dem AGV 16 auch seitlich an der Slave-Palette 2 angeordnete, hochfahrbare und absenkbare Führungsschienen 26 oberhalb der Höhe der Transportebene 20 angehoben und somit aktiviert. Die optionalen Führungsschienen 26 agieren in der Art einer Leitplanke und dienen als Fallschutz für die Ladeeinheit 4. Da unterschiedliche Transportrichtungen 24a, 24b unterschiedlich positionierte Führungsschienen 26a, 26b erfordern, ist ihr stetes Vorhandensein oberhalb der Transportebene 20 nicht wünschenswert.

Die in den Figuren 2a, 2b gezeigte Ausführungsform zeigt als Übertriebsrollen 8 ausgestaltete Übertriebsmittel 8 und als Antriebsrollen 22 ausgestaltete Antriebsmittel 22. Andere Ausgestaltungen sind auch möglich. So kann auch ein Förderband 22 an die Übertriebsmittel 8 gepresst werden und diese antreiben und auch ein Förderband 8 oder Kugelrollen 8 können als Übertriebsmittel 8 agieren. Auch eine indirektere Antriebsübertragung von dem Antriebsmittel 22 an das Übertriebsmittel 8 sind möglich, beispielsweise über Ritzel.

Das ganze Absenken und Anheben der Übertriebsmittel 8 ist für die Funktionalität nicht entscheidend, aber aus Sicherheitsgründen ist ein Absenken der Übertriebsmittel 8 und/oder deren Arretierung gerade dann wichtig, wenn die Slave-Palette 2 manuell betrieben wird.

Die Anordnung der Antriebsmittel 22 unter der Slave-Palette 2 bestimmt, welche der Übertriebsmittel 8a, 8b in Wirkkontakt gebracht und somit entlang welcher der Transportrichtungen 24a/24a', 24b/24b' die von dem Transportfahrzeug 16 unterfahrende Slave-Palette 2 fördern wird. Für eine andere Transportrichtung 24b, 24a wird der Wirkkontakt gelöst durch Absenken der Antriebsrolle 22 und das Transportfahrzeug 16 auf der Stelle rotiert. Ein schnellerer Richtungswechsel lässt sich erreichen, wenn das Transportfahrzeug zwei quer zueinander positionierte Antriebsmittel 22 aufweisen würde. Dann sind jedoch zwei entkoppelte Hubmechanismen notwendig.

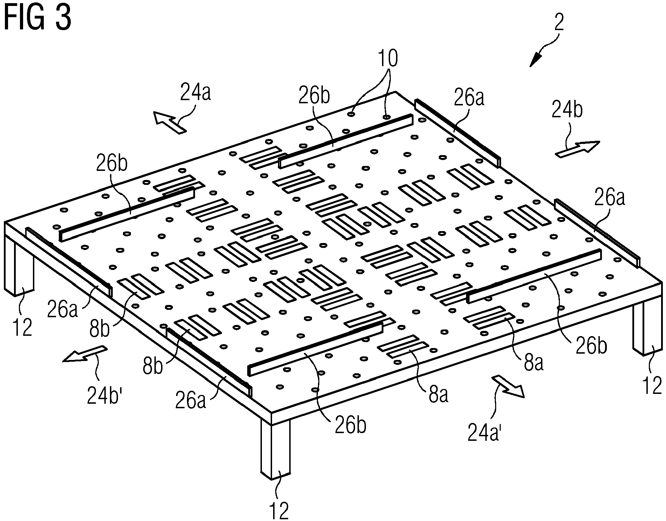

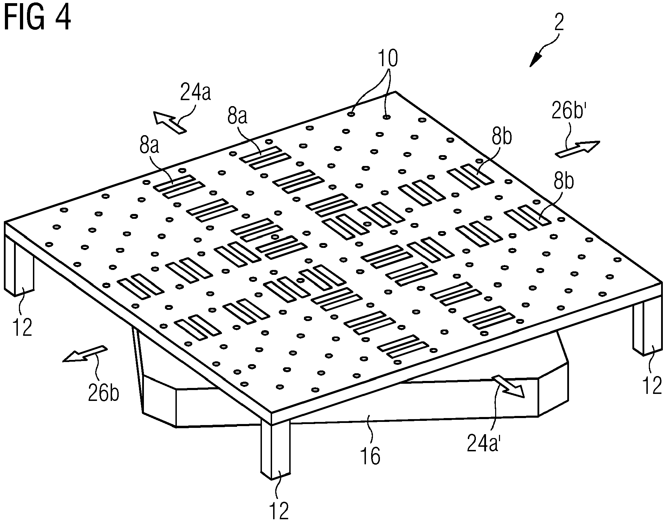

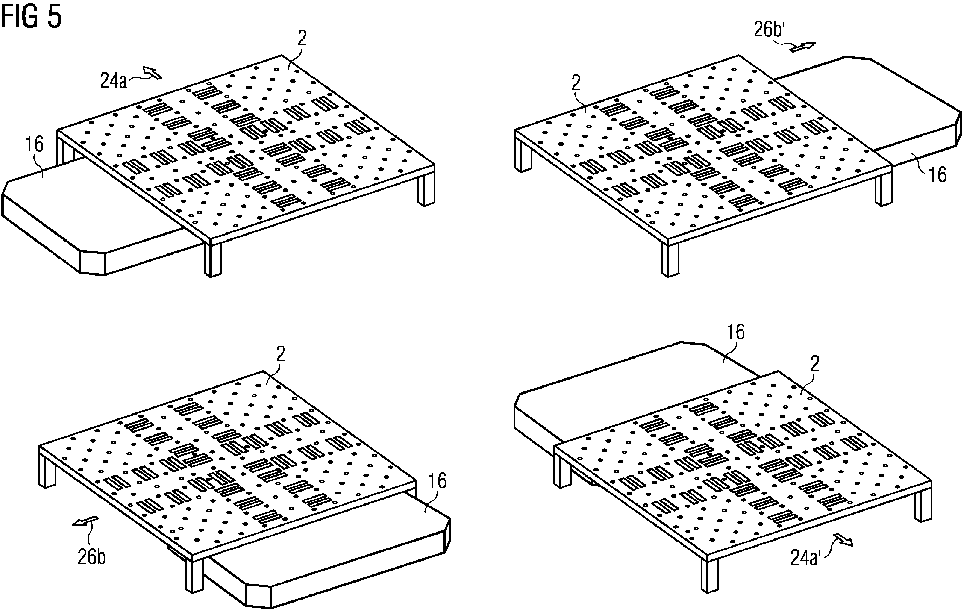

Figur 3 zeigt gemäß noch einer weiteren Ausführungsform die Hauptkomponenten einer 4-Wege-Slave-Palette 2 mit externem Antrieb 22. Die Slave-Palette 2 umfasst zwei Übertriebsrollen 8a, 8b, angetrieben von dem Antriebsmittel 22 eines AGVs 16, für vier Transportrichtungen 24a, 24a', 24b, 24b'. Optionale, durch das AGV 16 zu betätigende Führungsschienen 26 zur Führung der Ladeeinheit 4. Der Freiraum unter der Plattform 6 wird ermöglich durch vier außenliegende Füße 12 die ein Unterfahren des AGVs 16 von allen Seiten (Figur 5) und ein Drehen des AGVs 16 um die eigene Achse (Figur 4) unter der Slave-Palette möglich machen.

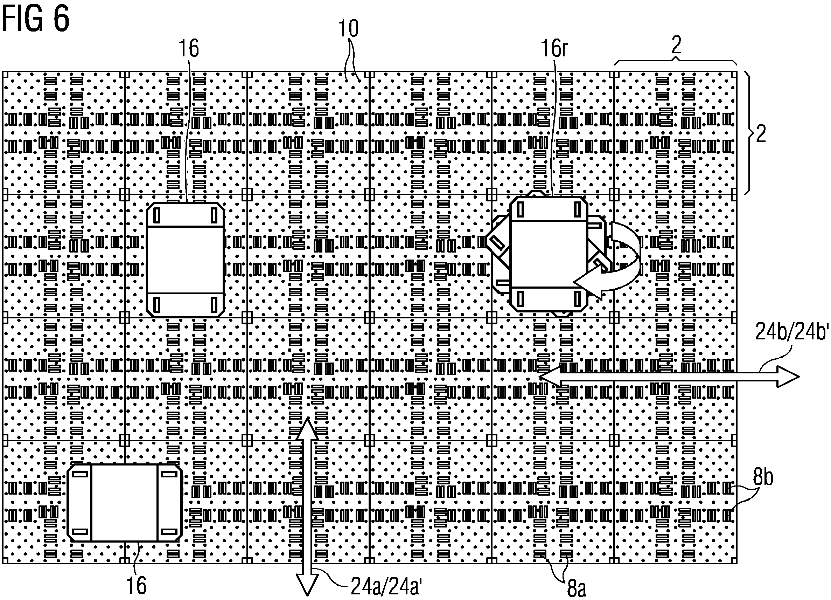

Figur 6 zeigt eine Aufsicht auf eine aus Slave-Paletten 2 ausgebildete Transportebene 20. Diese Transportebene 20 kann manuell, insbesondere wenn das Transportfahrzeug 16 nicht zur Verfügung steht und/oder nicht ordnungsgemäß funktioniert, und/oder mit die Slave-Paletten 2 unterfahrenden Transportfahrzeugen 16 genutzt werden. Um die Transportebene flexibel zu nutzen, können die Slave-Paletten 2 auch im laufenden Betrieb repositioniert werden.

Gemäß einer Ausführungsform können die Transportfahrzeuge 16 eine Slave-Palette 2 unterfahren, mit einem Hubmittel diese Slave-Palette 2 anheben, die angehobene Slave-Palette 2 verfahren und an anderer Stelle wieder absetzen. So können flexibel angepasst an den tatsächlichen aktuellen Bedarf Förderstrecken und Transportebenen erweitert, abgebaut und an anderer Stelle wieder neu aufgebaut werden. Um stabile Fördersysteme aufzubauen, werden an den Stellen, an denen Transportebenen 20 und Förderstrecken aufgebaut werden sollen, Vertiefungen für die Stützelemente 12 vorgesehen.

Gemäß einer Ausführungsform weisen die Transportfahrzeuge 16 Sensoren auf, die von unten eine An- bzw. Abwesenheit einer Ladeeinheit 4 auf der Transportebene 20 detektieren.

Gemäß einer Ausführungsform werden erfindungsgemäße Slave-Paletten 2 und Transportfahrzeuge 16 herangezogen um die Funktionalitäten (Speicherbereiche, Förderstrecke, Eckumsetzer) einer bestehenden Förderanlage nachzubilden. Durch Umpositionieren der Slave-Paletten 2 mit den Transportfahrzeugen 16 während des Betriebs wird die Förderanlage an die geänderten Anforderungen angepasst. Für typische Anforderungen bereits erprobte Layouts werden in einer Steuereinrichtung hinterlegt.

Die Slave-Paletten 2 werden gemäß einer Ausführungsform von denselben Transportfahrzeugen 16 bewegt. Hierzu unterfährt das Transportfahrzeug 16 eine umzuplatzierende Slave-Palette 2, diese wird anschließend durch das Transportfahrzeug 16 angehoben, verfahren und an anderer Position wieder abgesetzt.

Bei ordnungsgemäß funktionierendem und zur Verfügung stehenden Transportfahrzeug 16 unterfährt das Transportfahrzeug 16 eine ausgewählte Slave-Palette 2. Zum Bewegen einiger oder aller Übertriebsmittel 8 dieser Slave-Palette 2 wird das Antriebsmittel 22 des Transportfahrzeugs 16 in Wirkkontakt mit diesen Übertriebsmitteln 8 gebracht, so dass diese Übertriebsmittel 8 von dem Antriebsmittel 22 angetrieben werden, wodurch eine auf diesen Übertriebsmitteln 8 aufliegende Ladeeinheit 4 bewegt wird.

Der Wirkkontakt wird dann gelöst und das Transportfahrzeug 16 repositioniert durch Unterfahren einer anderen Slave-Paletten 2 oder durch Drehen des Transportfahrzeugs 16 unter derselben Slave-Palette 2.

Wenn nur ein Transportfahrzeug 16 zur Verfügung steht, erfolgt das Verfahren der Ladeeinheiten 4 sehr sequenziell. Wenn mehrere Transportfahrzeuge 16 zur Verfügung stehen, können diese benachbarte Slave-Paletten 2 unterfahren, so dass kontinuierliche Förderstrecken bzw. Transportebene 20 gebildet werden. Die Ladeeinheit 2 kann dann kontinuierlich bewegt werden. Dies erfordert eine koordinierte Ansteuerung der Transportfahrzeuge 16.

Gemäß einer Ausführungsform übernimmt ein Transportfahrzeug 16 eine Ladeeinheit 4 direkt mit seinen Antriebsmitteln 22, auf denen sie anschließend aufliegen und übergibt sie an eine der Slave-Paletten 2 oder eine andere Auflagefläche. Dies ermöglicht das rasche Verfahren einer Ladeeinheit 4 ohne dass zuvor eine Förderstrecke aus Slave-Paletten 2 ausgebildet werden muss.

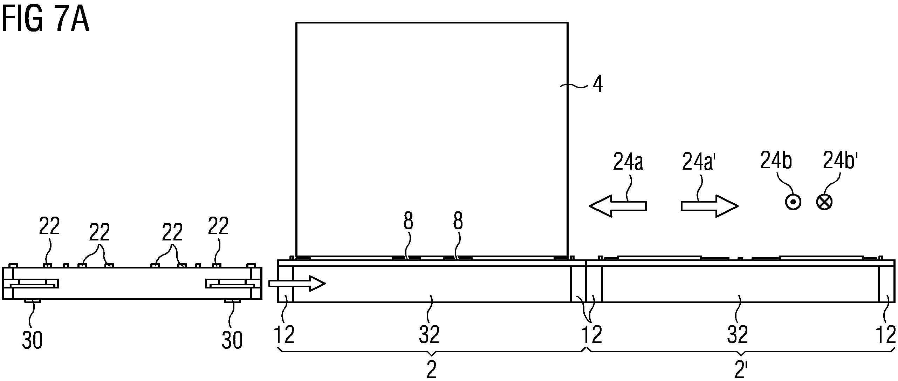

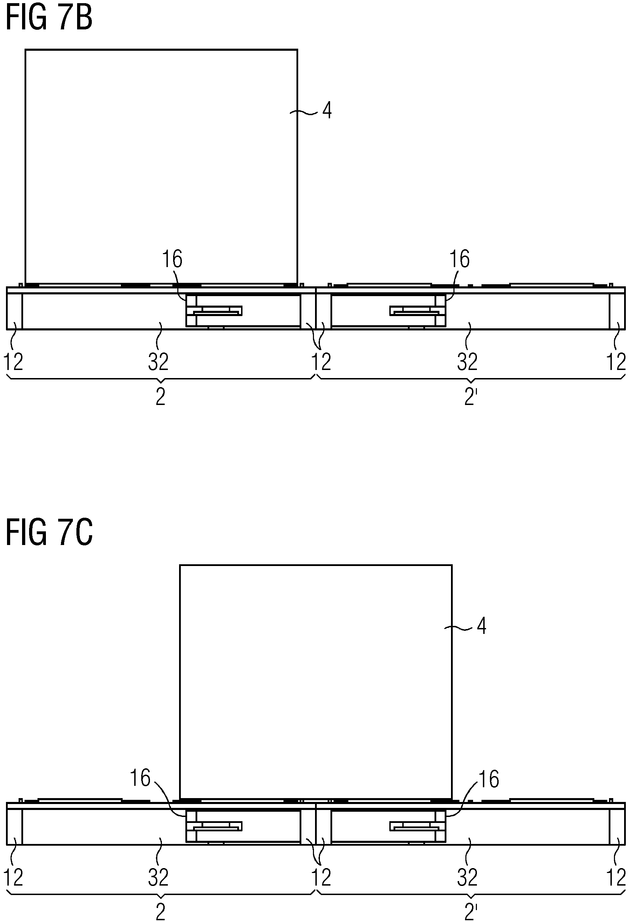

Figuren 7a - 7c zeigen die ersten Schritte des Transports einer Ladeeinheit 4 von einer ersten zu einer zweiten Slave-Palette 2, 2' - hierbei werden zeitgleich die Übertriebsmittel 8 von zwei Slave-Paletten 2 von demselben AGV 16 angetrieben. Der Antrieb für die Reifen 30 und die Antriebsmittel 22 für die Übertriebsmittel 8 sind voneinander unabhängig. Als Ausgangssituation (Figur 7a) sind zwei Slave-Paletten 2, 2' nebeneinander angeordnet. Ein AGV 16 fährt unter den Freiraum 32 der beiden Slave-Paletten 2, 2' (Schritt zwischen Figur 7a und Figur 7b) ohne in Wirkkontakt mit den Übertriebsmitteln 8 zu sein. Anschließend hebt das AGV 16 aus und mit dem Ausheben werden die Führungsschienen 26 aktiv (nicht explizit gezeigt; für das Funktionsprinzip optionaler, aber sicherheitsrelevanter Schritt). Das AGV 16 hebt seine Antriebsmittel 22 an, presst sie an die Übertriebsmittel 8 und durch Rollreibung werden die Übertriebsmittel 22 von dem Antriebsmittel 22 bewegt (Figur 7c).

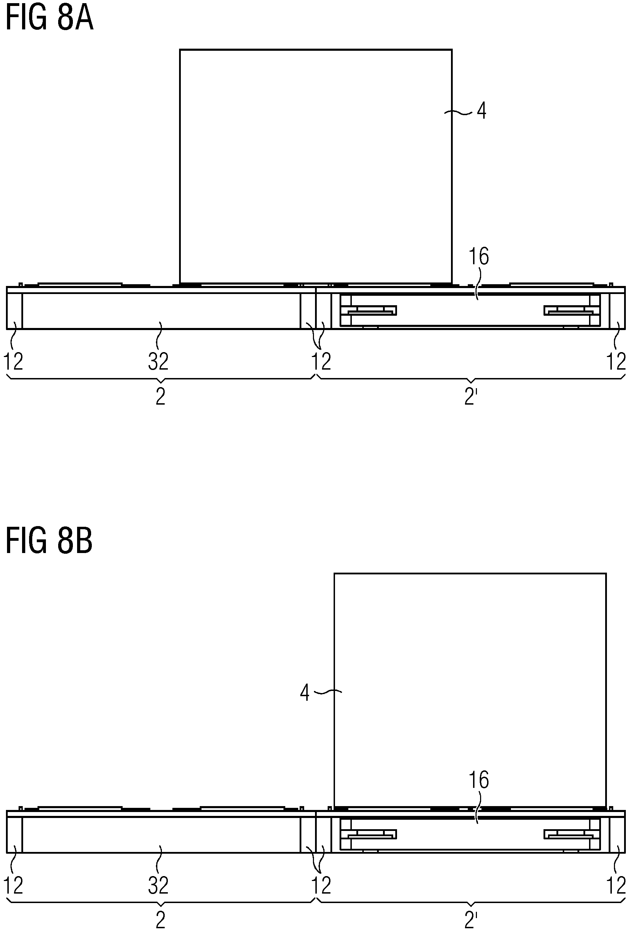

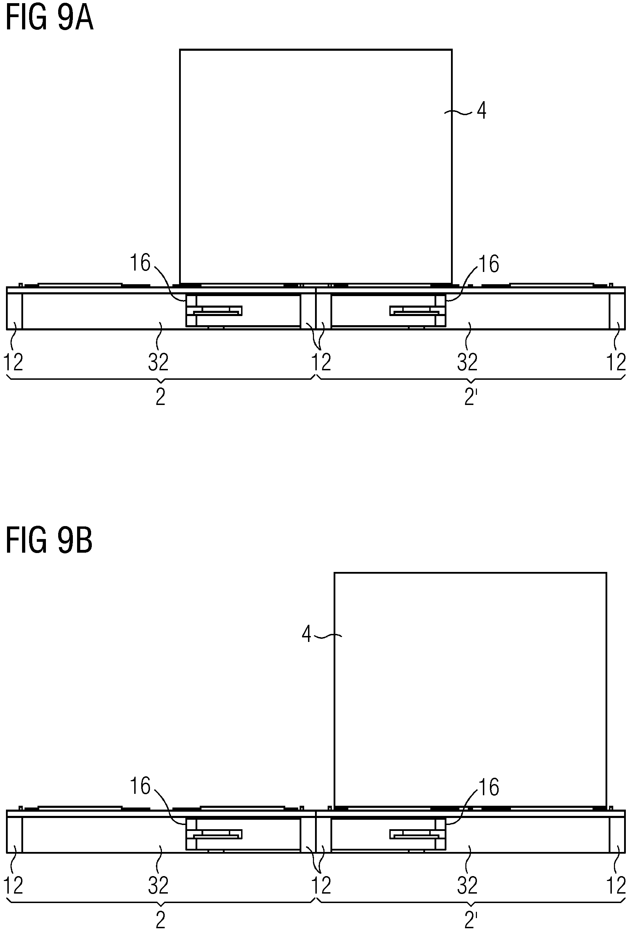

Der vollständige Transport des ULD 4 auf die zweite Slave-Palette 2' wird entweder sequenziell (Figuren 8a+8b) oder kontinuierlich (Figuren 9a+9b) durchgeführt. Ein sequenzieller Transport empfiehlt sich, wenn auf einer von Slave-Paletten 2, 2' aufgespannten Transportebene ULDs 4 gleichzeitig manuell und mit AGVs 16 verschoben werden. Zunächst wird das AGV 16 wieder absenken und mittig die zweite Slave-Palette 2' unterfahren (Figur 8a). Dann wird überprüft, ob die gesamte Slave-Palette 2' frei ist und erst dann wird bei vorhandenem freiem Platz der Wirkkontakt zwischen den Übertriebsmitteln 8 der zweiten Slave-Palette 2' und den AGV-Antriebsmittel 22 wiederhergestellt und das ULD 4 verschoben. Für dieses Überprüfen ist das AGV 16 mit Sensoren, z.B. Lichttastern, ausgestattet, die von unten die An- bzw. Abwesenheit von Gegenständen auf den Slave-Paletten 2, 2' detektieren können.

Wenn ULDs 4 nur automatisch mit AGVs 16 verschoben werden, ist der Steuereinheit die Position aller ULDs 4 auf allen Slave-Paletten 2, 2' bekannt. Daher kann das zu verschiebende ULD 4 direkt auf die ganze zweite Slave-Palette 2' verschoben werden ohne dass zunächst die An- bzw. Abwesenheit von Gegenständen auf dieser Slave-Palette 2' überprüft werden muss.

Gemäß einer anderen Ausführungsform wird die An- bzw. Abwesenheit von ULDs 4 auf der Ziel-Slave-Palette 2' vorher überprüft bzw. ist bekannt. Das AGV 16 wird zentral unter nur einer Slave-Palette 2 positioniert und so treiben die Antriebsmittel 22 des AGVs 22 nur die Übertriebsmittel einer Slave-Palette 2 an.

Gemäß einer weiteren Ausführungsform ist es möglich, ein ULD 4 permanent durch ein AGV 16 mitzunehmen. Hierzu bleibt das AGV 16 auch während des Verfahrens unter den Slave-Paletten 2 permanent im Wirkkontakt mit den Übertriebsmitteln 8 und verschiebt so ein ULD 4 kontinuierlich. Aber auch das Lösen des Wirkkontakts, bei Reibkontakt durch Absenken des Antriebsmittels 22 und anschließende Repositionierung ist möglich. Bei entsprechender Ausgestaltung der Slave-Paletten 2 und des AGVs 16 ist auch eine Mischung beider Vorgehensweisen möglich.

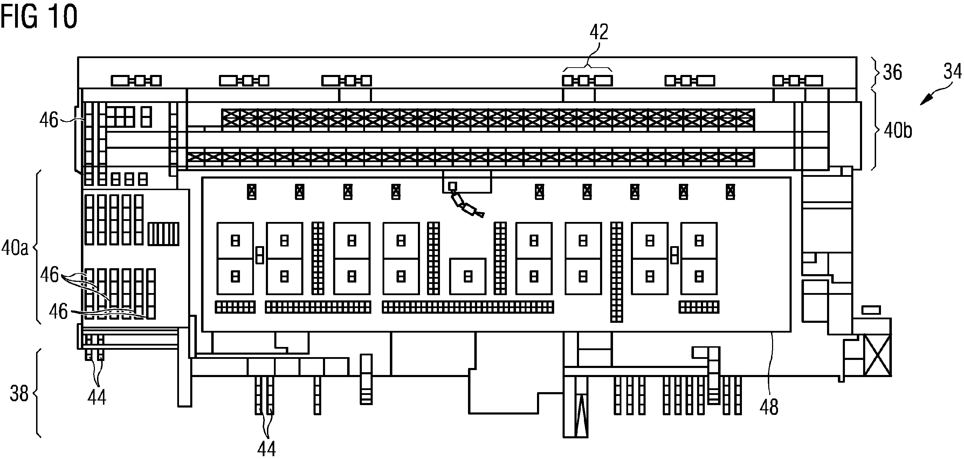

Figur 10 zeigt schematisch in Aufsicht ein typisches ULD-Fördersystem 34 eines Flughafens. Im Landside-Bereich 38 erfolgt die Anlieferung mit Anlieferfahrzeugen 44 (bzw. der Abtransport), der Transport erfolgt auf Förderstrecken 46 in einem ersten Sortier- und Speicherbereich 40a. Die ULD-Be- bzw. Entladung erfolgt im Bereich 48. Vor dem Beladen (bzw. Entladen) der Dollys 42 im Airside-Bereich 36 werden die ULDs 4 in einem zweiten Sortier- und Speicherbereich 40b behandelt. Der landseitige Speicherbereich 40a und der airseitige Speicherbereich 40b sind ausgestattet mit und verbunden über Fördertechnik 46 (Förderstrecken, Eckumsetzer, ...).

Die erfindungsgemässe Lösung erlaubt es, insbesondere die Bereiche 40a, 40b kostengünstig zu automatisieren und zudem flexibel zu gestalten.

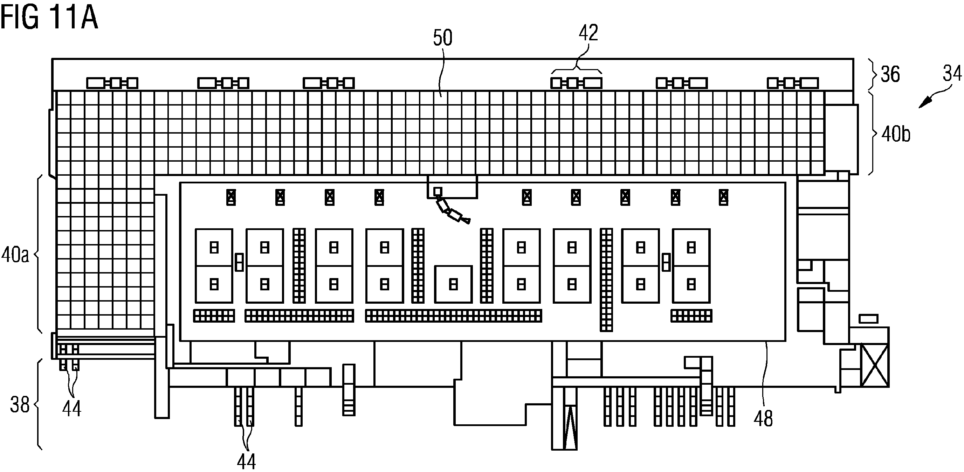

Figur 11a zeigt im Wesentlichen den in Figur 10 gezeigten Bereich 34 eines Flughafens, allerdings ohne Fördertechnik in den Bereichen 40a, 40b. Diese Bereiche 40a, 40b sind gemäss einer Ausführungsform nun mit Rastern 50 zur flexiblen Positionierung von Slave-Paletten 2 vorbelegt. Mit Hilfe eines AGVs 16 können die Slave-Paletten 2 wie oben beschrieben (das AGV 16 unterfährt die Slave-Paletten 2, hebt sie an und repositioniert sie sequenziell) an die gewünschten Rasterpositionen 50 transportiert. So kann das Fördersystem 34 flexibel ausgebildet und an den Tagesbedarf angepasst werden. Es ist also möglich, das Anlagenlayout entsprechenden Tagesschwankungen oder auch längerfristigen Änderungen den Rahmenbedingungen anzupassen. Es können verschiedene Layouts in dem IT-System der Steuereinheit hinterlegt werden, an die der physikalische Aufbau der Anlage 34 angepasst wird. Hierdurch wird die Auslastung der einzelnen Komponenten erhöht, der initiale Investitionsbedarf verringert und es kann flexibel, sogar im laufenden Betrieb, auf unerwartete Rahmenbedingungsänderungen reagiert werden. Da die ULDs 4 auf der Förderanlage 34 zudem nicht nur mit AGVs 16, sondern auch manuell verschoben werden können, ist die Förderanlage 34 nahezu komplett ausfallsicher.

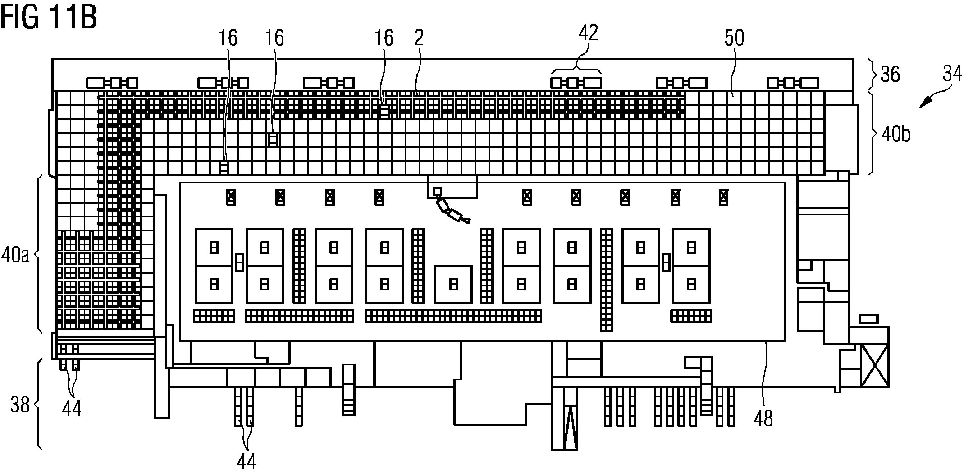

Figur 11b zeigt eine Situation mit einem Peak im landseitigen Bereich 40a. Der Peak erfordert eine flächenmässig grosse Transport- und Speicherebene, daher sind landseitig viele Slave-Paletten 2 angeordnet.

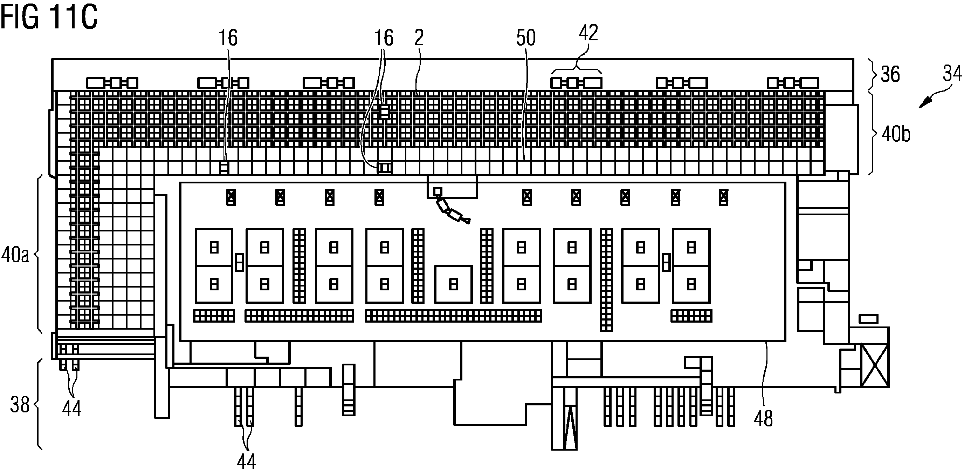

Figur 11c zeigt eine Situation mit einem Peak im airseitigen Bereich 40b.

### Bezugszeichenliste

- 2: Fördereinheit / Slave-Palette
- 4: Ladeeinheit
- 6: Plattform
- 8: Übertriebsmittel
- 9: Welle des Übertriebsmittels
- 10: Stützrollen
- 12: Stützelemente
- 14: Lagerung des Übertriebsmittels
- 16: Transportfahrzeug, AGV
- 20: Transportebene
- 22: Antriebsmittel
- 24: Transportrichtung
- 26: Führungselement, Führungsschiene
- 28: Fixierung
- 30: Transportmittel-Reifen
- 32: Freiraum unter der Fördereinheit
- 34: Fördersystem
- 36: Airside-Bereich
- 38: Landside-Bereich
- 40: Sortier- und Speicherbereich
- 42: Dollys
- 44: Anlieferfahrzeug
- 46: Fördertechnik
- 48: Bereich ULD-Be- und Entladung
- 50: Rasterplatz für Slave-Palette

## Patentansprüche

1. Fördereinheit (2) zum Transportieren einer Ladeeinheit (4), insbesondere einer ULD, umfassend eine Plattform (6), Übertriebsmittel (8), Stützrollen (10) und Stützelemente (12), wobei
- die Stützelemente die Plattform (6) derart angeordnet abstützen, insbesondere indem die Stützelemente an den Ecken der Plattform (6) angeordnet sind, dass die Fördereinheit (2) von einem fahrerlosen Transportfahrzeug (AGV) (16) unterfahrbar ist;
- die Plattform (6) Öffnungen aufweist, aus welchen die Stützrollen (10) jeweils herausragen, wobei die Stützrollen (10) mit ihren obersten Punkten eine Transportebene (20) definieren, auf der die Ladeeinheit (4) mit geringen Reibungsverlusten bewegbar ist;
- jeweils einige oder alle der Übertriebsmittel (8) mit einem Antriebsmittel (22) des die Fördereinheit (2) unterfahrenden Transportfahrzeugs (16) in Wirkkontakt bringbar und von diesem Antriebsmittel (22) antreibbar sind, so dass die Übertriebsmittel (8) eine auf ihnen aufliegende Ladeeinheit (4) bewegen;
- die Fördereinheit (2) mindestens zwei, insbesondere vier, durch Ausrichtung und Rollrichtung der jeweils angetriebenen Übertriebsmittel (8) bestimmte Transportrichtungen (24) aufweist, wobei zwei der Transportrichtungen (24) insbesondere schräg, noch insbesonderer quer und entlang den Seiten der Fördereinheit (2), zueinander sind.

2. Fördereinheit (2) nach Anspruch 1, **dadurch gekennzeichnet, dass**
die Übertriebsmittel (8) Übertriebsrollen oder Übertriebsbänder sind und der Wirkkontakt zwischen Übertriebsmittel (8) und Antriebsmittel (22) ein Reibkontakt ist.

3. Fördereinheit (2) nach einem der Ansprüche 1 bis 2, **dadurch gekennzeichnet, dass**
die Übertriebsmittel (8) arretierbar und/oder unterhalb der Transportebene absenkbar sind.

4. Fördereinheit (2) nach einem der Ansprüche 1 bis 3, zudem umfassend
entlang den Transportrichtungen (24) angeordnete, insbesondere oberhalb der Transportebene anhebbare Führungselemente (26), insbesondere Führungsschienen (26), wobei die Führungselemente (26) insbesondere von dem Transportfahrzeug (16) anhebbar sind.

5. Fördereinheit (2) nach einem der Ansprüche 1 bis 4, **dadurch gekennzeichnet, dass**
die Anordnung der Stützelemente dem Transportfahrzeug (16) erlaubt, die Fördereinheit (2) entlang allen Transportrichtungen (24) von allen Seiten her zu unterfahren und sich unter der Fördereinheit (2) zu drehen, insbesondere ohne dass Übertriebsmittel (8) und Antriebsmittel (22) währenddessen in Wirkkontakt sind.

6. Fördereinheit (2) nach einem der Ansprüche 1 bis 5, **dadurch gekennzeichnet, dass**
die Stützrollen (10) als Übertriebsmittel (8) agieren.

7. Verfahren zum Transportieren, Speichern und Sortieren von Ladeeinheiten (4) auf Fördereinheiten (2) nach einem der Ansprüche 1 bis 6 unter Heranziehen von einem fahrerlosen Transportfahrzeug (16), wobei
- das Transportfahrzeug (16) ein Antriebsmittel (22) umfasst, welches ausgestaltet ist, in Wirkkontakt mit jeweils einigen oder allen Übertriebsmitteln (8) gebracht zu werden und sie anzutreiben;
- das Transportfahrzeug (16) und die Fördereinheit (2) derart aneinander angepasst dimensioniert und ausgestaltet sind, dass das Transportfahrzug die Fördereinheit (2) unterfahren und sich unter der Fördereinheit (2) drehen kann, ohne währenddessen in Wirkkontakt zu sein und ohne die Fördereinheit (2) mitzubewegen;
- die Fördereinheiten (2) hinter- und/oder nebeneinander anordenbar sind, so dass sie Förderstrecken und/oder Transportflächen für die Ladeeinheiten (4) ausbilden;
bei ordnungsgemäß funktionierendem und zur Verfügung stehendem Transportfahrzeug (16) **gekennzeichnet durch** die Verfahrensschritte:
a) das Transportfahrzeug (16) unterfährt eine ausgewählte Fördereinheit (2);
b) zum Bewegen einiger oder aller Übertriebsmittel (8) dieser Fördereinheit (2) wird das Antriebsmittel (22) des Transportfahrzeugs (16) in Wirkkontakt mit diesen Übertriebsmitteln (8) gebracht und diese werden von dem Antriebsmittel (22) angetrieben, so dass eine auf diesen Übertriebsmitteln (8) aufliegende Ladeeinheit (4) bewegt wird;
c) Lösen des Wirkkontakts;
d) Repositionieren des Transportfahrzeugs (16) durch Unterfahren einer anderen Fördereinheiten (2) oder durch Drehen des Transportfahrzeugs (16) unter derselben Fördereinheit (2) .

8. Verfahren nach Anspruch 7, **dadurch gekennzeichnet, dass** der Wirkkontakt hergestellt bzw. gelöst wird durch Anheben bzw. Absenken des Antriebsmittels (22).

9. Verfahren nach einem der Ansprüche 7 bis 8, zudem umfassend die Verfahrensschritte
- das Transportfahrzeug (16) unterfährt eine umzuplatzierende Fördereinheit (2);
- Anheben, Verfahren und Absetzen dieser Fördereinheit (2) an anderer Position durch das Transportfahrzeug (16).

10. Verfahren nach einem der Ansprüche 7 bis 10, **gekennzeichnet durch**
Anheben bzw. Absenken und/oder Lösen bzw. Arretieren der Übertriebsmittel (8) wenn der Wirkkontakt zwischen Antriebsmittel (22) und Übertriebsmittel (8) hergestellt bzw. gelöst wird.

11. Verfahren nach einem der Ansprüche 7 bis 10, **gekennzeichnet durch**
erneute Durchführung des Verfahrens ab Verfahrensschritt b) nach dem Repositionieren des Transportfahrzeugs (16) und/oder koordinierte Durchführung der Verfahrensschritte mit einem weiteren fahrerlosen Transportfahrzeug (16).

12. Verfahren nach einem der Ansprüche 7 bis 11, zudem umfassend den Verfahrensschritt
beim Herstellen des Wirkkontakts mit den Übertriebsmitteln (8) einer der Transportrichtungen (24) werden die entlang dieser Übertriebsrollen angeordneten Führungselemente (26) hochgefahren.

13. Verfahren nach einem der Ansprüche 7 bis 12, zudem umfassend den Verfahrensschritt
ein Transportfahrzeug (16) nimmt eine Ladeeinheit (4) direkt auf und übergibt sie an eine der Fördereinheiten (2) oder eine andere Auflagefläche.

14. Verfahren nach einem der Ansprüche 7 bis 13, **gekennzeichnet durch**
manuelles Verschieben einer auf den Stützrollen (10) einer oder mehrerer Fördereinheiten (2) aufliegenden Ladeeinheit (4) wenn das Transportfahrzeug (16) nicht zur Verfügung steht und/oder nicht ordnungsgemäß funktioniert.

15. Fördersystem umfassend mindestens eine Fördereinheit (2) nach einem der Ansprüche 1 bis 6 und mindestens ein fahrerloses Transportfahrzeug (16), **dadurch gekennzeichnet, dass**
das Fördersystem Mittel zur Durchführung des Verfahrens gemäß einem der Ansprüche 7 bis 14 umfasst.
